# EUROPEAN PATENT SPECIFICATION

(11) **EP 2 458 257 B1**
(45) Date of publication and mention of the grant of the patent: **14.05.2014**
(21) Application number: 11190613.7
(22) Date of filing: 24.11.2011
(51) Int. Cl.: F16M 7/00, A47B 91/02, D06F 39/12

(54) **Adjustable leg for household appliances**
Verstellbares Bein für Haushaltsgeräte
Pied ajustable pour appareils domestiques

(30) Priority: 26.11.2010 TR 201009771
(43) Date of publication of application: 30.05.2012
(73) Proprietor: Vestel Beyaz Esya Sanayi ve Ticaret A.S., 45030 Manisa (TR)
(72) Inventor: Imir, Can, 45030 Manisa (TR); Inci, Omer Can, Izmir (TR)
(74) Representative: Cayli, Hülya

(56) References cited:
- DE-A1- 4 028 599
- DE-U1-202005 012 626
- US-A- 2 384 020
- US-A- 2 932 122
- US-A- 3 071 887
- US-A- 4 955 569

## Description

### Technical Field

Present invention relates to adjustable legs provided in household type appliances, which are used for seating the appliance on the floor.

### Prior Art

Full seating of the electrical household appliances (also known as white goods) on the floor where they stand is crucial along with their remaining at a horizontal stance. For this purpose, various adjustable legs are available which have been developed for appliances that must stand fixed on the floor (e.g. washing machines), and for appliances that must remain at a horizontal stance (e.g. refrigerators, ovens).

Published patent application No US04801114 of the prior art is an example of the subject matter of the invention. This application discloses a household type appliance the rear legs of which are adjustable. The rear legs of this appliance are coupled to one another by a bar interconnected, and can slide within the curved ducts; horizontal stance of the appliance is ensured by the rising of one of the legs while the other leg is lowered. The system seems to be disadvantageous due to the fact that the production of the system is difficult owing to the structural properties thereof, and that the legs are unable to act independently from one another. Apart from that, one needs to access to the back of the appliance in order to make adjustments.

In document DE 202005012526 U1 is disclosed one of the embodiments for solving said problems. In this document, the height adjustment device is arranged.The height adjustment device has a rotatable rod and spindle in the same axis. While the spindle is rotating, the rod is rotating. There is a nut having inner thread communicating with the thread of the spindle. When there is rotation of the spindle , there is a displacement of the adjusting nut. On the adjusting nut, there is inclined plane. This inclined plane is in contact with the oblique plane of the foot part. The displacement of the adjusting nut causes the displacement of the oblique plane of the foot part. As a result of this displacement the house hold appliance gets higher.

In patent document US 2932122 A there is two type of leveling in the appliance. One of them is left to right, the other one is front to back. For leveling front to back manual adjuster is placed opposite to the nonadjustable foot. To level appliance screw driver or key is used through the small aperture in the front of the appliance casing to turn the adjusting screw. For leveling it from left to right manual adjuster is placed opposite to the automatic adjuster. If the center of gravity is toward the automatic adjuster slight downward pressure may be applied on the corner diagonally opposite to automatic adjuster so as to provide three point bearing on manual adjuster and nonadjustable foot., which will permit automatic adjuster to automatically adjust downwardly to the floor and thus provide four point bearing.

In patent document US 4955569 A is containing two set of leveling assembly. Each leveling assembly includes a set of rollers for moving the refrigerator forward and backward. The front leveling assembly is used to initially set the refrigerator in position and to level the rear of the refrigerator from side to side. The rear leveling assembly is used to level the rear of the refrigerator with respect to the front of the refrigerator. To raise the front of the refrigerator sufficiently to lift the rollers off of the floor. When the rod is rotated to the right, the bracket assembly will move forward on the rollers resulting the rear of the refrigerator upward. When the rod is rotated left, the bracket assembly move rearwardly. The weight of the refrigerator will also bias the assembly is moved rearwardly.

### Brief Description of the Invention

The household type appliance of the invention comprises at least one adjustable leg, provided under the body of the appliance, which stands firmly on the floor. The appliance is also provided with pivots which can rotate around its own longitudinal axis, each connected with a leg, extending from the front of the body towards the back and having a turning end that protrudes from the front of the body.

The other end of each pivot enters into a slide via a screw threaded connection. The slide can be slid back and forth along the pivot as the pivot is being turned. Bottom surface of the slide, which is in the form of an oblique plane, contacts the top surface of the leg, which also has an oblique plane form; and the slide bears the weight of the body of the appliance.

### Objective of the Invention

The aim of the present invention is to provide a household type appliance the legs of which are independently adjustable.

Another aim of the invention is to ensure that these said legs can be adjusted from the front of the appliance.

Another aim of the invention is to provide a reliable household type appliance having the above mentioned features, which is simple and cost-effective to produce.

### Description of the Drawings

An exemplary household type appliance of the invention and an adjustable leg thereof are illustrated in the annexed figures wherein
Figure 1 is a perspective view of a section of the household type appliance.
Figure 2 is a detailed view of the bottom part of the household type appliance.
Figure 3 side view of the household type appliance.
Figure 4 is a sectional view of the adjustable leg.

The parts in the figures are individually enumerated and corresponding terms of these reference numbers are as follows.

| | |
|---|---|
| Household type appliance | (A) |
| Body of the appliance | (1) |
| Leg | (2) |
| Top surface | (2a) |
| Slide | (3) |
| Bottom surface | (3a) |
| Pivot | (4) |
| Base | (5) |
| Bed | (6) |
| Back of the appliance | (7) |
| Front of the appliance | (8) |
| Turning end | (9) |
| Opening | (10) |
| Socket | (11) |

### Disclosure of the Invention

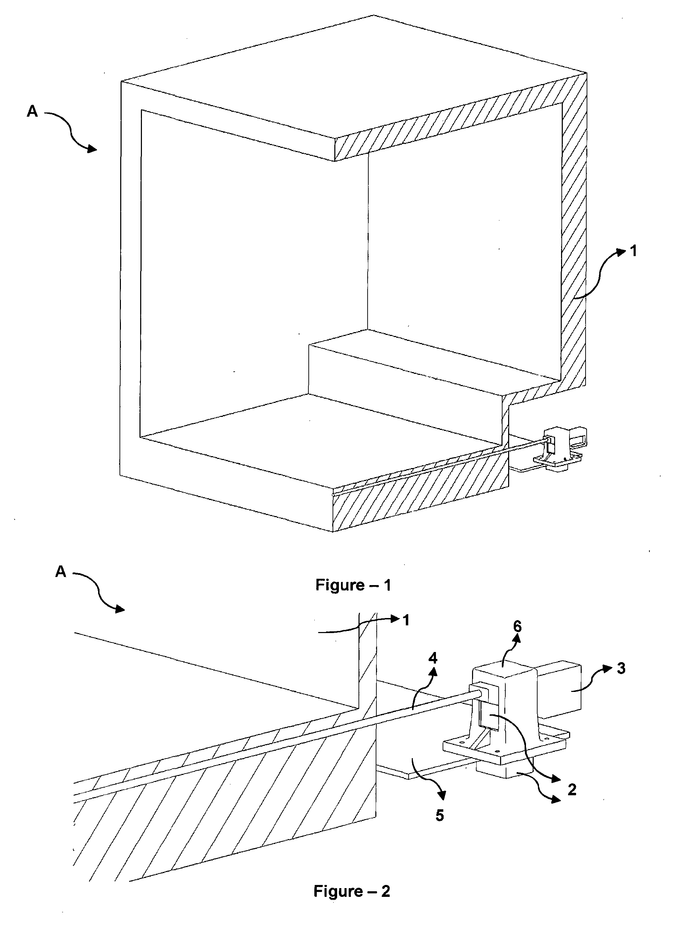

Figure 1-3 show perspective view and side view of a section of the appliance (A). Under the body (1) of the appliance is provided at least one adjustable leg (2) which stands firmly on the floor and bears the whole body (1) of the appliance.

The appliance (A) of the invention is provided with pivots (4), each connected to a leg (2), extending from the front (8) of the body (1) towards the back (7). Each pivot (4) has a turning end (9) which protrudes from the front (8) of the body (1); thus allowing the users to turn the pivot (4) about its own longitudinal axis. The other end of the pivot (4) enters into a slide (3), the details of which are disclosed below, where the pivot (4) and the slide (3) are coupled to each other via a screw threaded connection. In other words, the slide (3) can be slid back and forth along the pivot (4) as the pivot (4) is being turned. (The slide (3) bears the weight of the body (1) of the appliance and conveys this load to the leg (2)).

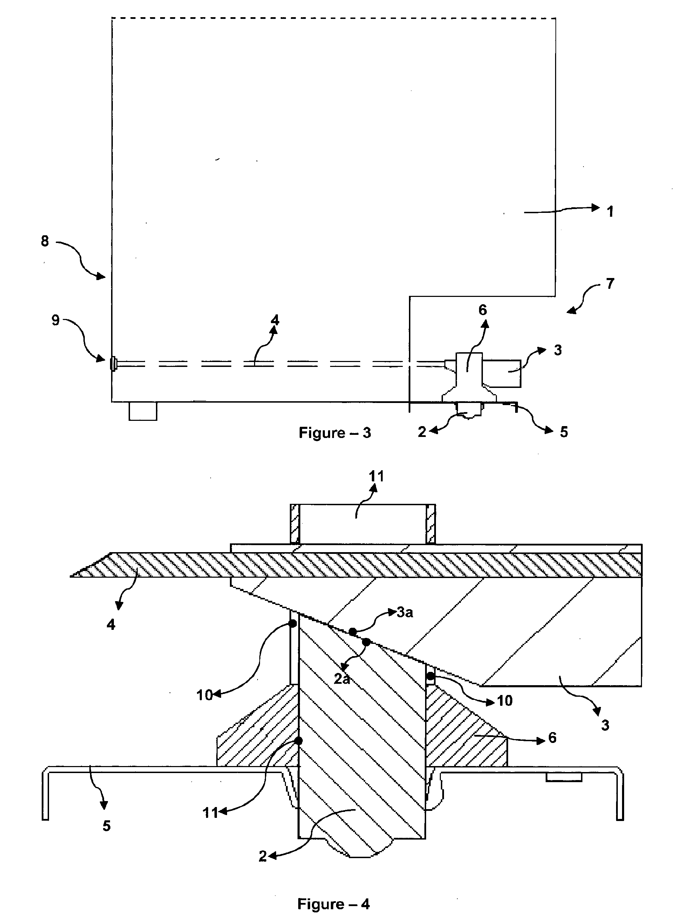

The leg (2) and the slide (3) contact each other and are located in the same bed (6). The bed (6) is fixed onto the base (5) of the appliance (by screws etc. and / or by snap fit engagement); and the bed (6) is provided both with an opening (10) through which the slide (3) can move (back and forth along the pivot (4)) in one direction and with a socket (11) (shown in Figure 4) through which the leg (2) moves up and down (with respect to the bed (6)).

Figure 4 illustrates the sectional view of the leg (2) together with the associated components. The slide (3) is located on the leg (2), as is shown, and the top surface (2a) of the leg (2), which is in the form of an oblique plane, and the bottom surface (3a) of the slide (3), which also has an oblique plane form, contact each other. (The contacting surfaces (2a, 3a) can be coated with materials having a low friction coefficient (e.g. Teflon) or the contacting components can be made of materials having a low friction coefficient.) For this reason, the leg (2) slides up and down (with respect to the bed (6)) through the socket (11) as the slide (3) moves back and forth. (The leg (2) and the bed (6) act dependently. When the leg (2) stands firmly on the floor, for instance, the bed (6), therefore the base (5) and the body (1) to which the base is connected, move up and down with the movement of the slide (3)).

Thanks to the appliance (A) of the present invention, each leg (2) provided under the body (1) of the appliance can be independently adjusted in a swift and easy manner without needing to access to the bottom or back of the body (1).

## Claims

1. A household type appliance (A) comprising a body (1), at least one adjustable leg (2) standing firmly on the floor located under its body; pivots (4) which can rotate around its own longitudinal axis, each connected with a leg (2), extending from the front (8) of the body towards the back (7) and having a turning end (9) that protrudes from the front (8) of the body (1); a slide (3) into which the other end of each pivot (4) enters via a screw threaded connection; which can be slid back and forth along the pivot (4) as the pivot (4) is being turned; bottom surface (3a) of which contacts the top surface (2a) of the leg (2);which bears the weight of the body (1) of the appliance **characterized by** further comprising a bed (6) fixed on the base (5) of the appliance; provided both with an opening (10) through which the slide (3) can move back and forth along the pivot (4) and with a socket (11) through which the bed (6) moves up and down with respect to the leg (2).

## Patentansprüche

1. Haushaltsähnliches Gerät (A) mit einem Körper (1), mit zumindest einem einstellbaren Fuß (2), der fest oder stabil auf dem unter seinem Körper liegenden Boden steht; mit Achsen oder Drehelementen (4), die um ihre jeweilige Längsachse verdrehbar sind, wobei jedes Drehelement mit einem Fuß (2) verbunden ist, wobei sie sich von der Front (8) bis zur Rückseite (7) des Körpers erstrecken und ein Einstellende (9) besitzen, welches von der Front (8) des Körpers (1) vorsteht, mit einem Schlitten oder Schiebestück (3), in welches das andere Ende jedes Drehelements (4) hereinsteht, über eine Schraubgewinde-Verbindung, welcher Schlitten (3) nach vorne und nach hinten längs des Drehelements (4) bewegbar ist, wenn das Drehelement (4) gedreht oder verdreht wird, mit einer Bodenfläche (3a), welche die obere Fläche (2a) des Fußes (2) berührt, welcher die Kraft oder das Gewicht des Körpers (1) des haushaltsähnlichen Geräts trägt, weiter **gekennzeichnet durch** ein Bett oder eine Aufnahme (6), die an einer Basis (5) des haushaltsähnlichen Geräts angeordnet ist, welche beide (6) mit einer Öffnung (10) versehen sind, **durch** welche der Schlitten oder das Schiebestück (3) zurück und nach vorne bewegbar ist, entsprechend dem Drehelement (4), und mit einer Stützeinrichtung (socket, 11), **durch** welche das Bett oder die Aufnahme (6) aufwärts und abwärts relativ zu dem Fuß (2) bewegbar ist.

## Revendications

1. Appareil domestique (A) comprenant un corps (1), au moins un pied ajustable (2) se tenant fermement sur le sol situé au-dessous de son corps ; des pivots (4) qui peuvent tourner autour de son propre axe longitudinal, chacun d'eux étant relié à un pied (2), s'étendant de l'avant (8) du corps vers l'arrière (7) et ayant une extrémité tournante (9) faisant saillie de l'avant (8) du corps (1) ; une glissière (3) dans laquelle l'autre extrémité de chaque pivot (4) entre par l'intermédiaire d'une liaison filetée vissée ; qui peut coulisser en va-et-vient le long du pivot (4) à mesure que le pivot (4) est tourné ; dont une surface inférieure (3a) est en contact avec la surface supérieure (2a) du pied ; qui porte le poids du corps (1) de l'appareil **caractérisé en ce qu'**il comprend en outre un socle (6) fixé sur la base (5) de l'appareil ; pourvus tous les deux d'une ouverture (10) à travers laquelle la glissière (3) peut se déplacer en va-et-vient le long du pivot (4) et d'une douille (11) à travers laquelle le socle (6) se déplace vers le haut et vers le bas par rapport au pied (2).
